# EUROPÄISCHE PATENTANMELDUNG

(11) **EP 1 005 938 A2**
(43) Veröffentlichungstag der Anmeldung: **07.06.2000**
(21) Anmeldenummer: 99113407.3
(22) Anmeldetag: 12.07.1999
(51) Int. Cl.: B23D 63/12, B23D 63/14

(54) **Sägeblattschärfmaschine mit unabhängigen Zahnflankenschleifköpfen**

(30) Priorität: 03.12.1998 DE 19855773
(71) Anmelder: WALTER AG, 72072 Tübingen (DE)
(72) Erfinder: Randl, Johann, 2601 Sollenau (AT); Motzer, Willi, 72072 Tübingen (DE)
(74) Vertreter: Patentanwälte Rüger, Barthelt & Abel

(57) **Zusammenfassung**

Eine Sägeblattschärfmaschine (1) weist zwei Schleifköpfe (3, 4) für den Flankenschliff insbesondere hartmetallbestückter Kreissägeblätter auf. Die beiden Schleifköpfe (3, 4) sind unabhängig voneinander in einer senkrecht zu dem Sägeblatt (2) festgelegten Richtung bewegbar, wozu separat ansteuerbare Achsen (Y2.1 und Y2.2) dienen. Die übrigen Richtungen werden durch weitere Achsen (X2, Z2) gesteuert, die beiden Schleifköpfen (3, 4) gemeinsam sind. Dadurch ist eine Anpassung an unterschiedliche Sägeblatt- und Zahngeometrien möglich. Weitere Schleifköpfe (15, 41) können vorgesehen sein.

## Beschreibung

Die Erfindung betrifft eine Sägeblattschärfmaschine, die insbesondere für hartmetallbestückte Sägeblätter vorgesehen ist.

Kreissägeblätter benötigen in der Regel einen seitlichen Überstand der Zähne über die seitlichen Planflächen des Sägeblatts. Dieser Überstand kann durch eine gegenseitige Verschränkung der Zähne oder durch eine Verbreiterung der Zähne, insbesondere im Zahnbrustbereich erzeugt werden. Insbesondere hartmetallbestückte Sägeblätter machen von letztgenannter Maßnahme Gebrauch. Jeder Zahn trägt an seiner Vorderseite ein Hartmetallstück, an dem die Schneidkanten des Zahns ausgebildet sind. Das Hartmetallstück legt dabei an seiner Vorderseite die Zahnbrust, an seiner Außenseite den Zahnrücken und an beiden Seiten die Zahnflanken fest. Die Hauptschneide wird dabei zwischen der Zahnbrust und dem Zahnrücken definiert. In vielen Fällen muss beim Produzieren oder Schärfen eines Sägeblatts jedoch nicht nur die Hauptschneide hergestellt oder wiederhergestellt werden, sondern es müssen die Zahnflanken eine definierte Form erhalten.

Dazu ist aus der DE 4244180 A1 eine Schleifmaschine zum beidseitigen Schärfen der Zahnflanken von hartmetallbestückten Sägeblättern bekannt. Die Schleifmaschine weist dazu zwei Schleifköpfe auf, die jeweils eine um eine Drehachse drehbar gelagerte angetriebene Schleifscheibe aufweisen. Die Drehachsen der beiden Schleifköpfe sind zueinander parallel ausgerichtet. Jeder Schleifkopf ist auf einer Linearführung gelagert, deren Führungsrichtung mit der Drehachse der Schleifspindel einen spitzen Winkel einschließt. Die Führungsrichtungen der beiden Linearführungen bestimmen die Vorschubrichtungen, mit denen beide Schlitten gleichzeitig zugestellt werden, um damit beide Flanken des Zahns gleichzeitig zu schleifen. Die beiden Führungen sind wiederum von Führungsschlitten getragen, mit denen die Schleifköpfe quer zu dem Sägeblatt verstellbar sind. Beide Schlitten sind von einer gemeinsamen Gewindespindel angetrieben und verstellbar, so dass bei Drehung der Gewindespindel die Schlitten aufeinander zu oder voneinander weg gefahren werden.

Dies erfordert eine genaue Ausrichtung des Sägeblatts auf eine gewünschte Mittelebene hin. Insbesondere bei Umstellung der Schleifmaschine auf Sägeblätter mit unterschiedlichen Blattdicken kann dies zu Problemen führen.

Aus der DE 4120567 C2 ist eine Maschine zum mehrstufigen Bearbeiten von Kreissägeblättern bekannt, die eine erste Schleifeinrichtung mit zwei Schleifscheiben für die Zahnflanken und eine gegenüberliegend angeordnete zweite Schleifeinrichtung mit einer Schleifscheibe für den Zahnrücken aufweist. Beide Schleifeinrichtungen sind unabhängig voneinander verstell- bzw. einstellbar. Die Schleifvorrichtung zum Schleifen der Zahnflanken ist so ausgebildet, dass die Zahnflanken gleichzeitig schleifbar sind, wobei die gewünschten Zahnflanken-Freiwinkel bedarfsweise einstellbar sind. Zur Zustellung sind die Schleifscheiben für die Zahnflanken mittels einer Pinole in Radialrichtung des Sägeblatts mittels einer gemeinsamen Kolbenzylindereinheit hin und her bewegbar.

Aus der DE 4113854 C2 ist eine vergleichbare Schleifmaschine zum Schärfen von Sägeblättern bekannt, die ebenfalls einen Schleifkopf mit zwei um zueinander parallele Drehachsen gelagerte Schleifscheiben aufweist, die allerdings in erster Linie zum Schleifen des Zahnrückens dienen. Der Abstand der Schleifscheiben zueinander ist fest vorgegeben. Beide Drehachsen sind an einem starren Halter gelagert, der seinerseits um eine in der Sägeblattebene liegende Schwenkachse schwenkbar, sowie in drei zueinander rechtwinkligen Richtungen verschiebbar gelagert ist.

Gleichzeitiges Schleifen beider Zahnflanken an einem Zahn ist bei dieser Schleifmaschine nicht beabsichtigt.

Es ist Aufgabe der Erfindung, eine Sägeblattschärfmaschine zu schaffen, die auf einfache Weise an unterschiedliche Zahnformen und -größen anpassbar ist.

Diese Aufgabe wird mit einer Sägeblattschärfmaschine gelöst, die die Merkmale des Patentanspruchs 1 aufweist.

Die erfindungsgemäße Sägeblattschärfmaschine weist eine Aufnahme- und Positioniereinrichtung für ein Sägeblatt auf, die das Sägeblatt in Schleifposition festklemmt und hält und nach erfolgter Schleifoperation an einem oder mehreren Zähnen um eine Zahnteilung weiterdreht, um es in der nächsten Arbeitsposition wiederum festzuklemmen. Wenigsten eine Arbeitsstation enthält eine Schleifeinrichtung mit zwei Schleifköpfen, die unabhängig voneinander quer zu dem Sägeblatt verstellbar gelagert sind. Zur Verstellung dienen vorzugsweise als NC-Achsen ausgebildete Verstell- oder Antriebseinrichtungen. Wenn beide Schleifköpfe mit ihren Schleifscheiben gleichzeitig mir einem Zahn des Sägeblatts in Eingriff sind, können die Schleifbewegungen der beiden Schleifköpfe unabhängig voneinander kontrolliert werden. Damit wird es möglich, unterschiedliche spezielle Zahnformen zu bearbeiten und die Sägeblattschärfmaschine ist nicht auf spezielle Zahntypen festgelegt. Bspw. können Zahnflanken bearbeitet werden, die an dem Sägeblatt abwechselnd seitlich unterschiedlich weit vorstehen. Außerdem können Sägeblätter bearbeitet werden, bei denen sich breitere Zähne mit schmaleren Zähnen abwechseln Ferner können Sägeblätter eine Gleichteilung oder eine Ungleichteilung aufweisen. Schließlich spielt die axiale Dicke der zu bearbeitenden Sägeblätter und somit die Lage der Mittelebene der Sägeblätter eine untergeordnete Rolle. Die beiden zum Schleifen der Zahnflanken vorgesehenen Schleifköpfe können separat an die jeweils gewünschte Position herangefahren werden.

Dies ermöglicht einen sehr vielseitigen Einsatz der Sägeblattschärfmaschine auch bei ungewöhnlichen Zahnformen und wechselnden Zahngrößen. Die Schleifscheiben können NC-gesteuert auf hochkomplizierten Kurven bewegt werden.

Außerdem kann bedarfsweise eine gewisse Zustellbewegung in Querrichtung des Sägeblatts bewirkt werden, so dass mit relativ wenigen Verstellachsen und einheitlichen Schleifscheiben unterschiedliche Zahnformen und insbesondere unterschiedliche Freiwinkel an den Zahnflanken erzeugt werden können. Die Freiwinkel können durch Überlagerung einer Zustellbewegung in Querrichtung des Sägeblatts mit einer anderweitigen Bewegung des jeweiligen Schleifkopfs erzielt werden.

Die Schleifköpfe können bedarfweise in Radialrichtung und in Umfangsrichtung des Sägeblatts linear verstellbar angeordnet sein. Zur Verstellung dienen vorzugsweise NC-Achsen, so dass eine komplette Rechnersteuerung der Schleifbewegung möglich wird. Damit lassen sich für die beiden Schleifköpfe unter Zugrundelegung von insgesamt vier Verstellachsen, von denen die Querrichtung des Sägeblatts für beide Schleifköpfe gesonderten Achsen und die Radialrichtung und die Umfangsrichtung beider Schleifköpfen gemeisamen Achsen zugeordnet ist, nahezu beliebige Bewegungskurven der Schleifköpfe erzielt werden. Durch die Zusammenfassung der Bewegung der beiden Schleifköpfe in Radialrichtung auf eine einzige NC-Achse und in Umfangsrichtung wiederum auf eine einzige NC-Achse, wird die Anzahl der erforderlichen Verstelleinrichtungen und Achsen auf einen geringen Wert reduziert. Dies ergibt einen überschaubaren einfachen Aufbau und eine gute Schleifgenauigkeit. Insbesondere sind für keinen Schleifkopf mehr als drei Verstellmöglichkeiten wirkungsmäßig hintereinander angeordnet.

Zusätzlich zu den Schleifköpfen für die Zahnflanken, können ein oder mehrere Schleifköpfe zur gesonderten Schleifbearbeitung des Zahnrückens und/oder der Zahnbrust vorgesehen sein. Diese Schleifköpfe sind wenigstens mit zwei Achsen bewegbar gelagert. Von diesen ist eine Achse etwa radial zu dem Sägeblatt und die andere etwa in Umfangsrichtung ausgerichtet. Zusätzlich kann eine senkrecht zu der Sägeblattebene angeordnete Schwenkachse und/oder eine senkrecht zu dem Sägeblatt ausgerichtete Linearachse vorgesehen sein. Durch Überlagerung der einzelnen Achsbewegungen können Schleifkopfbewegungen in beliebiger oder nahezu beliebiger Richtung erzielt werden. Dies gestattet die Bearbeitung komplizierter Zahnformen, die durch die Konzeption der Sägeblattschärfmaschine nicht festgelegt sind.

Die Drehachsen der Schleifscheiben der Schleifköpfe sind vorzugsweise parallel zu der Mittelebene des Sägeblatts ausgerichtet. Zusätzlich sind die Drehachsen vorzugsweise parallel zu einer der Achsen der Schleifköpfe ausgerichtet. Bspw. sind die Drehachsen der Schleifköpfe für die Zahnflanken bezüglich des Sägeblatts im Wesentlichen in Radialrichtung orientiert. In dieser Richtung werden beide Schleifköpfe vorzugsweise gemeinsam bewegt, wänrend sie rechtwinklig zu dem Sägeblatt, d.h. von diesem weg bzw. auf dieses zu, voneinander unabhängig bewegbar sind.

Das Sägeblatt wird vorzugsweise von einer zentralen Aufnahme gehalten, die das Sägeblatt drehfest aufnimmt. In einer bevorzugten Ausführungsform ist die Aufnahme mit einer NC-Achse verbunden, mittels derer das Sägeblatt in jede gewünschte Drehposition gefahren und dort gehalten werden kann. Auf diese Weise ist eine besonders einfache Umstellung auf unterschiedliche Zahngrößen und eine Anpassung an wechselnde Zahnteilungen möglich.

Weitere Einzelheiten vorteilhafter Ausführungsformen der Erfindung ergeben sich aus der Zeichnung, der Beschreibung oder Unteransprüchen. In der Zeichnung sind Ausführungsbeispiele der Erfindung veranschaulicht. Es zeigen:
Fig. 1 eine Sägeblattschärfmaschine in schematisierter Prinzipdarstellung mit zwei Schleifköpfen für den Zahnflankenschliff und einem Schleifkopf für den Zahnrückenschliff,
Fig. 1a eine Detailansicht der Sägeblattschärfmaschine nach Figur 1, mit Blickrichtung in der Sägeblattebene,
Fig. 2 die Schleifmaschine nach Figur 1, mit einem zusätzlichen Schleifkopf für den Zahnbrustschliff, in schematisierter Prinzipdarstellung,
Fig. 2a eine Detailansicht der Sägeblattschärfmaschine nach Figur 2, mit Blickrichtung in der Sägeblattebene,
Fig. 3 eine abgewandelte Ausführungsform einer Sägeblattschärfmaschine mit zwei Schleifköpfen für den Zahnflankenschliff und einem kombinierten Schleifkopf für den Zahnrücken und Zahnbrustschliff, in schematisierter Darstellung,
Fig. 3a eine Detailansicht der Sägeblattschärfmaschine nach Figur 3, mit Blickrichtung in der Sägeblattebene, und
Fig. 4 eine Sägeblattaufnahme für die Sägeblattschärfmaschinen nach den Figuren 1 bis 3, in längsgeschnittener schematisierter Darstellung.

### Beschreibung:

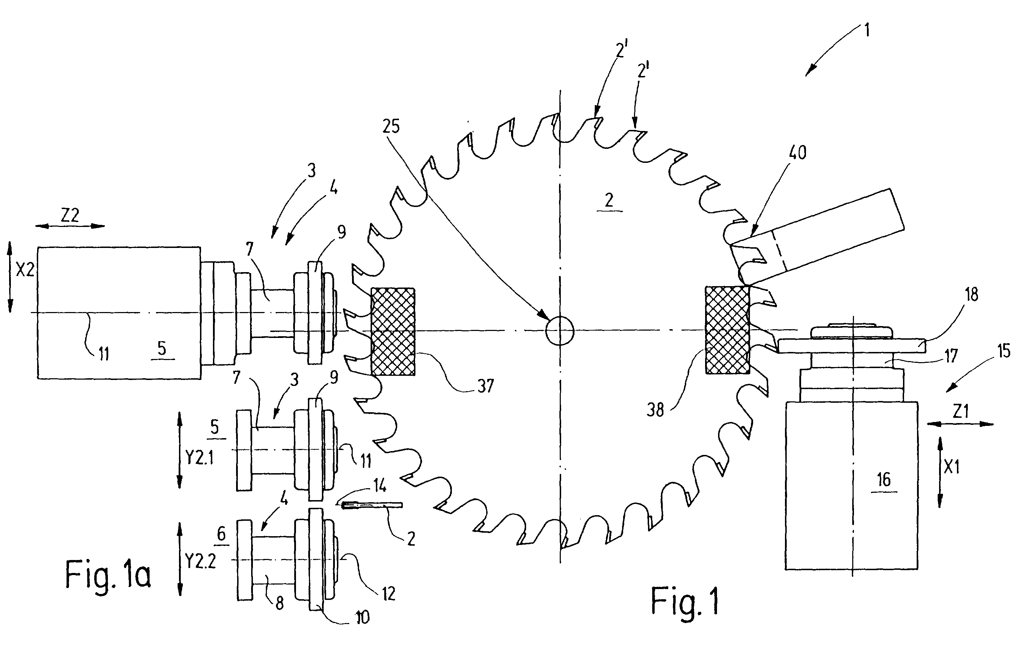

In Figur 1 ist eine Sägeblattschärfmaschine 1 anhand ihrer Schleifköpfe und eines Kreissägeblatts 2 veranschaulicht, das mit der Sägeblattschärfmaschine 1 zu schärfen ist. Die Sägeblattschärfmaschine 1 weist zwei Schleifköpfe 3, 4 auf, wobei der Schleifkopf 3 in Figur 1 den Schleifkopf 4 verdeckt. Bezüglich der Draufsicht auf das Sägeblatt 2 mit Blickrichtung axial zu dem Sägeblatt sind die Schleifköpfe 3, 4 hintereinander angeordnet. Zur Verdeutlichung ist in Figur 1a die Anordnung der Schleifköpfe 3, 4 in Bezug auf das Sägeblatt 2 in einer ausschnittsweisen Darstellung gesondert in Seitenansicht mit Blickrichtung in der Sägeblattebene veranschaulicht. Die Schleifköpfe 3, 4 sind untereinander gleich ausgebildet. Jeder Schleifkopf 3, 4 weist einen Antrieb 5, bspw. einen Servomotor 5, 6 auf, dessen Abtriebswelle 7, 8 eine Schleifscheibe 9, 10 trägt. Die Abtriebswellen 7, 8 sind um zueinander parallele Drehachsen 11, 12 drehbar, die parallel zu einer Mittelebene 14 des Sägeblatts 2 ausgerichtet sind.

Beide Schleifköpfe 3, 4 sind jeweils von einer NC-Achse X2.1, X2.2 in Vertikalrichtung, d.h. axial zu dem Sägeblatt 2 unabhängig voneinander bewegbar. Beide NC-Achsen X2.1 und X2.2 unterstehen der Steuerung einer nicht weiter veranschaulichten zentralen Steuereinheit. Die NC-Achsen X2.1 und X2.2 sind vorzugsweise auf einem gemeinsamen Träger gelagert, der wiederum von NC-Achsen X2 und Z2 radial zu dem Sägeblatt 2 (Z2) und in einer zur Umfangsrichtung tangentialen Richtung (X2) bewegbar ist. Die beiden NC-Achsen X2 und Z2 unterstehen wiederum der Steuerung der zentralen Steuereinheit. Die Bewegungsrichtungen beider Achsen liegen in der Mittelebene 14 des Sägeblatts 2.

Dem Sägeblatt 2 ist außerdem ein weiterer Schleifkopf 15 zugeordnet, der zum Schleifen der Zahnrücken einzelner Zähne 2' des Sägeblatts 2 dient. Der Schleifkopf 15 weist einen Servomotor 16 als Antrieb auf, auf dessen Abtriebswelle 17 eine Schleifscheibe 18 mit zylindrischer Außenkontur sitzt. Der Schleifkopf 15 ist durch entsprechende NC-Achsen X1, Y1 und Z1, die unabhängig voneinander von entsprechenden Servomotoren betätigt und von der zentralen Steuereinrichtung gesteuert werden, in Axialrichtung (Y1) des Sägeblatts 2 sowie in seiner Radialrichtung (Z1) und in einer zur Umfangsrichtung tangentialen Richtung (X1) bewegbar. Die Bewegungen des Schleifkopfs 15 sind unabhängig von den Bewegungen der Schleifköpfe 3, 4 steuerbar.

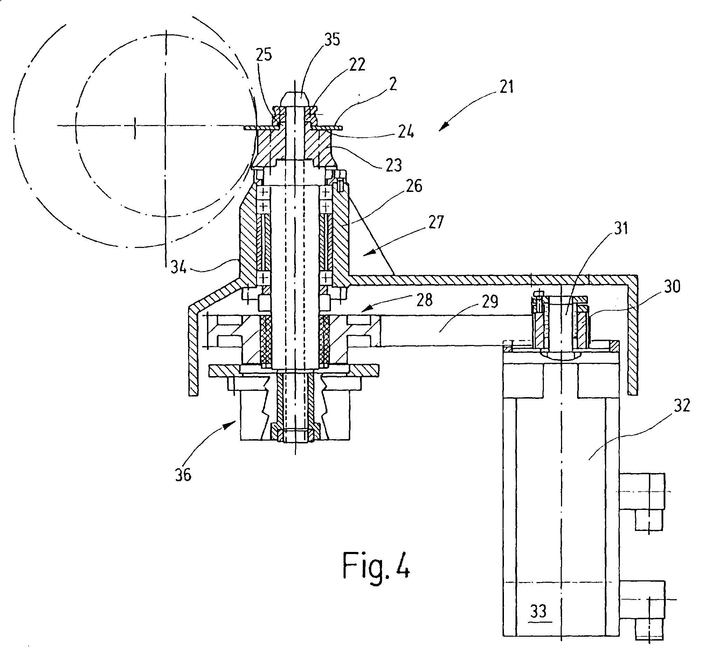

Zur Lagerung des Sägeblatts 2 dient eine aus Figur 4 ersichtliche Aufnahme 21, die zwei Klemmbacken 22, 23 zur zentralen drehfesten Aufnahme des Sägeblatts 2 aufweist. Der untere Klemmbacken 23 weist eine obere Planfläche 24 als Auflagefläche des Sägeblatts 2 auf. Mittig steht über die Planfläche 24 ein Dorn 25 vor, der der Zentrierung des Sägeblatts 2 dient. Der Klemmbacken 23 ist an einer Welle 26 gehalten, die in einer Trägereinrichtung 27 drehfest gelagert ist. Die Welle 26 trägt an ihrem vom dem Klemmbacken 23 abliegenden Ende eine Zahnriemenscheibe 28, die über einen Zahnriemen 29 mit einer Riemenscheibe 30 verbunden ist, die auf einer Abtriebswelle 31 eines Servomotors 32 sitzt. Der auf diese Weise über ein Getriebe mit den Klemmbacken 23 verbundene Servomotor 32 legt jede Drehposition des Klemmbackens 23 definiert fest. Der Servomotor 32 ist mit einem Encoder 33 verbunden. Sowohl der Encoder 33 als auch der Servomotor 32 ist mit der zentralen Steuerung verbunden und bildet eine NC-Achse. Ersatzweise oder ergänzend kann die Welle 26 mit einem Encoder versehen sein.

Die Welle 26 ist eine Hohlwelle, die von einem Zugbolzen 34 durchsetzt wird. Dieser durchragt den Klemmbacken 23 und weist im Abstand zu diesem einen Kopf 35 auf, dessen Außendurchmesser nicht größer als der Außendurchmesser des Dorns 25 ist. Der Klemmbacken 22 ist bspw. seitlich offen, d.h. wie ein U-förmiger Bügel ausgebildet und kann unter den Kopf 35 geschoben werden, um das Sägeblatt 2 gegen die Planfläche 24 zu spannen. Zur Betätigung des Zugbolzens 34 ragt dieser bei dem riemenscheibenseitigen Ende der Hohlwelle 26 aus dieser heraus und ist dort mit einer Betätigungseinrichtung 36 verbunden. Diese kann pneumatisch, elektrisch oder hydraulisch betätigt sein.

Zur Festlegung des Sägeblatts 2 in den Schleifpositionen und zum Abstützen des Sägeblatts 2 in Zahnnähe während des Schleifvorgangs, sind unter dem Sägeblatt 2 sowohl bei den Schleifköpfen 3, 4 als auch bei dem Schleifkopf 15 Auflagen 37, 38 angeordnet, die einen Elektromagneten enthalten. Mit diesem wird das Sägeblatt 2 während der Bearbeitung der Zähne 2' an eine an der Auflage 37, 38 vorgesehene Planfläche herangezogen und somit festgelegt. Alternativ können auch herkömmliche mechanische Klemmeinrichtungen vorgesehen werden. Die Aufflagen 37, 38 oder die alternativen Klemmeinrichtungen unterstehen der zentralen Steuerung der Sägeblattschärfmaschine 1.

Zur Erfassung der Zahnteilung ist im Bereich des Umfangs des Sägeblatts 2 außerdem ein Sensor 40 zur Erfassung der Zahnteilung angeordnet. Dieser ist bspw. ein optoelektronischer Sensor (Lichtschranke), ein taktiler Sensor oder ein magnetischer Sensor. Der Sensor 40 ist unmittelbar mit der zentralen Steuerung verbunden und gibt somit Rückmeldung sowohl über die Zahnteilung als auch, zumindest falls gewünscht, über die Zahnposition und somit über die Drehposition des Sensorblatts 2.

Die insoweit beschriebene Sägeblattschärfmaschine 1 arbeitet wie folgt:

Zum Aufspannen eines Sägeblatts 2 sind zunächst alle Schleifköpfe 3, 4, 15 in ihren Radialrichtungen Z1, Z2 relativ weit nach außen gefahren. Das Sägeblatt 2 wird nun auf die Aufnahme 21 aufgelegt, so dass seine zentrale Öffnung über den Dorn 25 findet und das Sägeblatt 2 auf der Planfläche 24 liegt. Nach Einsetzen des Klemmbackens 22 wird die Spanneinrichtung 36 betätigt und das Sägeblatt 2 somit festgeklemmt. Falls die Zahnteilung nicht bekannt ist, steuert die zentrale Steuereinrichtung den Servomotor 32 an, um das Sägeblatt zu drehen. Der Sensor 40 erfasst dabei ein oder mehrere Zahndurchgänge, woraus die zentrale Steuereinrichtung die Zahnteilung ermittelt. Außerdem kann mit dem Sensor 40, wenn dieser in Radialrichtung verschiebbar, bspw. mit einer NC-Achse verfahrbar angeordnet ist, der Durchmesser des Sägeblatts bestimmt werden, falls dieser nicht anderweitig bekannt ist.

Zum Schärfen des Sägeblatts 2 wird dies nun in eine erste Position gedreht, in der ein Zahn 2' in der Nähe der Schleifköpfe 3, 4 und ein gegenüberliegender Zahn in der Nähe des Schleifkopfs 5 positioniert ist. In dieser Position hält der Servomotor 32 die eingestellte Position und die magnetischen Auflagen 37, 38 werden erregt, um das Sägeblatt anzuziehen und festzulegen. Gemäß einem vorgegebenen Schleifprogramm werden nun die Schleifköpfe 3, 4 in Radialrichtung (Z2) zugestellt. Ggfs. wird eine Bewegung in Umfangsrichtung (X2) überlagert, indem die entsprechende Achse X2 betätigt wird. Die Achsen X2.1 und X2.2 dienen dabei dazu, die Schleifköpfe 3, 4 bei der gemeinsamen Zustellbewegung unabhängig voneinander auf die gewünschte Zahnflanke einzustellen. Während sie synchron in Radialrichtung oder schräg zu dieser an dem jeweiligen Zahn entlang gefahren werden, werden die Achsen X2.1 und X2.2 getrennt gesteuert und überwacht.

Gleichzeitig führt die zentrale Steuereinrichtung den Schleifkopf 15 so, dass durch Überlagerung der Bewegung der Achsen X1, Y1 und Z1 der gewünschte Rückenschliff zustande kommt. Die Schleifscheibe 18 kann dabei ein oder mehrmals über die Rückenfläche des jeweiligen Zahns geführt werden. Es lassen sich insbesondere durch die Bewegung der Achse Y1, die bezüglich der Berührungsstelle zwischen dem Zahn und der Schleifscheibe 18 in Umfangsrichtung der Schleifscheibe 18 gerichtet ist, plane Zahnrückenflächen erzielen.

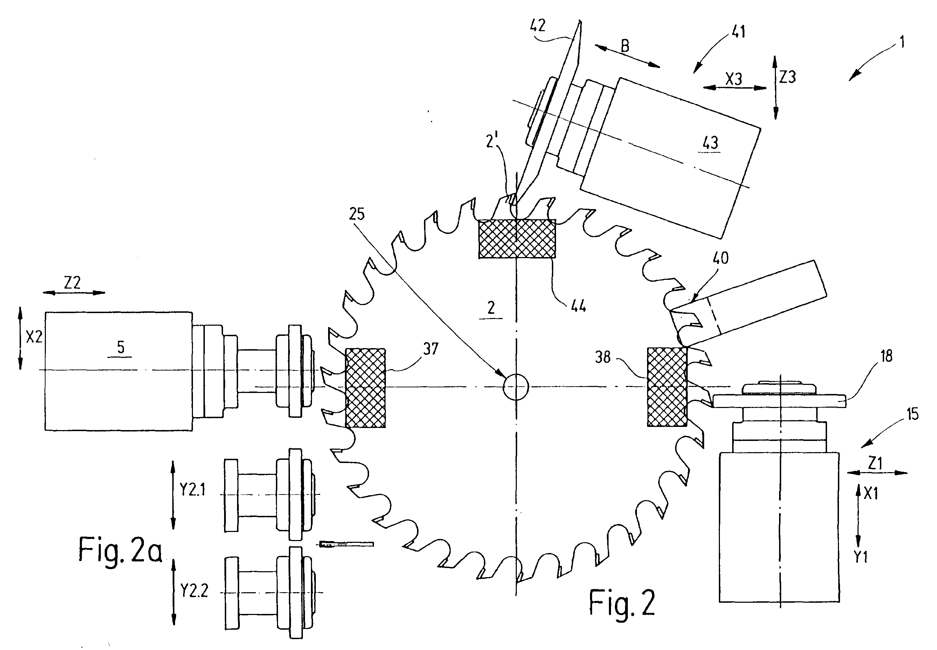

Während die Sägeblattschärfmaschine 1 nach Figur 1 nur die Zahnflanken und die Zahnrücken schleift, ist in Figur 2 eine Sägeblattschärfmaschine 1 veranschaulicht, mit der zusätzlich die Zahnbrust geschliffen werden kann. Hinsichtlich der Schleifköpfe 3, 4 und des Schleifkopfs 15 stimmen beide Sägeblattschärfmaschinen 1 miteinander überein. Insoweit wird unter Zugrundelegung gleicher Bezugszeichen auf die vorstehende Beschreibung verwiesen. Zusätzlich ist jedoch ein weiterer Schleifkopf 41 mit einer tellerförmigen Schleifscheibe 42 vorgesehen. Der Schleifkopf 41 ist von den übrigen Schleifköpfen 3, 4, 15 beabstandet. Bspw. können die Schleifköpfe 3, 4, 15, 41 im Winkelabstand von jeweils 90° oder bedarfsweise in einem anderen Winkelabstand wie bspw. 120° voneinander angeordnet werden. Der Schleifkopf 41 weist einen Servomotor 43 auf, der der Steuerung der zentralen Steuereinheit untersteht und die Schleifscheibe 42 antreibt, deren Planfläche zum Schleifen der Zahnbrust dient. Der Schleifkopf 41 wird von einem Träger gehalten, der mittels zweier NC-Achsen X3, Z3 bezüglich des bearbeiteten Zahns 2' des Sägeblatts 2 radial (Z3) und in Umfangsrichtung (X3) bewegt oder verfahren werden kann. Zusätzlich kann eine Schwenkachse B vorgesehen sein, um die der Schleifkopf 41 schwenkbar ist. Die Schwenkachse B steht senkrecht auf der Mittelebene 14 des Sägeblatts 2. Alle Achsen X3, Z3 und B sind NC-Achsen, die von der Steuereinrichtung gesteuert werden.

Zur Abstützung des von dem Schleifkopf 41 bearbeiteten Zahns 2' ist eine weitere magnetische Werkstückauflage 44 vorgesehen, die wie die Werkstückauflagen 37, 38 von der zentralen Steuereinrichtung gesteuert ist.

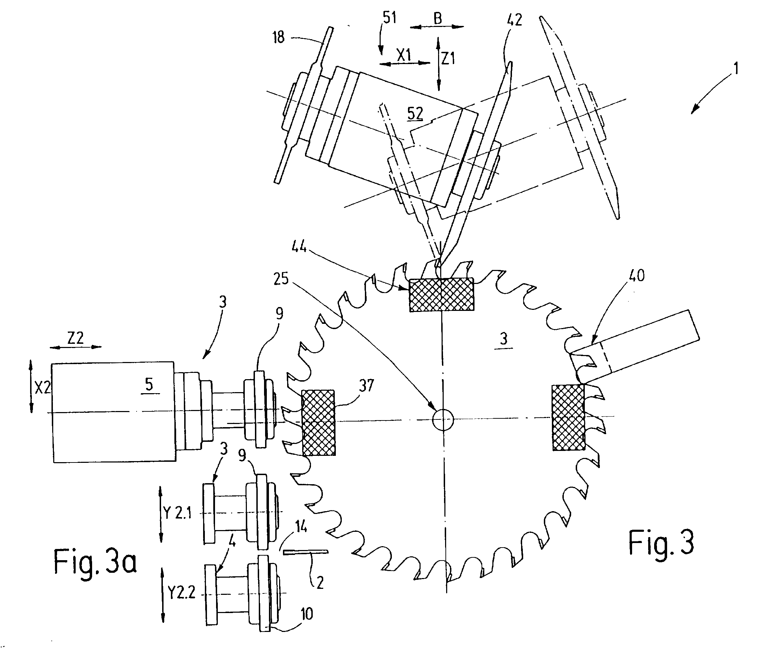

In Figur 3 ist eine weitere Ausführungsform der Sägeblattschärfmaschine 1 schematisch veranschaulicht. Soweit Übereinstimmung mit vorstehend beschriebenen Ausführungsformen nach den Figuren 1 und 2 besteht, wird unter Zugrundelegung gleicher Bezugszeichen auf die vorstehende Beschreibung verwiesen. Der Unterschied, insbesondere zu der Ausführungsform nach Figur 2, besteht in der Zusammenfassung der Schleifköpfe 14, 41 zu einem einzigen Schleifkopf 51, der an der Position des Schleifkopfs 41 nach Figur 2 angeordnet ist, bedarfsweise jedoch auch an anderer Position, bspw. an der Position des Schleifkopfs 15 nach Figur 2 angeordnet sein kann. Der Schleifkopf 51 ist in Richtung der drei Linearachsen X1, Y1, Z1 des Schleifkopfs 15 bewegbar. Zusätzlich ist er um die Achse B des Schleifkopfs 41 schwenkbar. Der Schleifkopf 51 weist als Antrieb einen Servomotor 52 oder einen anderweitigen Elektromotor auf, der beide Schleifscheiben 18, 42 antreibt. Diese können auf einer Welle mit Abstand zueinander angeordnet sein. Vorzugsweise sind sie an entgegengesetzten Enden einer durchgehenden Welle des Antriebsmotors 52 angeordnet. Wie sich aus Figur 3 ergibt, können die Schleifscheiben 42, 18 mit dem Zahn 2' nacheinander in Eingriff gebracht werden. Dazu ist eine kombinierte Verschiebe/Schwenk-Bewegung erforderlich, die durch entsprechende koordinierte Ansteuerung der Achsen X1, Z1 und B erreicht wird.

Zusätzlich kann eine nicht weiter dargestellte Achse vorgesehen sein, die eine Schwenkbewegung um die von Z1 bestimmte Richtung ermöglicht. Dies gestattet den Schliff der Brustfläche mit einem Axialwinkel.

Eine Sägeblattschärfmaschine 1 weist zwei Schleifköpfe 3, 4 für den Flankenschliff insbesondere hartmetallbestückter Kreissägeblätter auf. Die beiden Schleifköpfe 3, 4 sind unabhängig voneinander in einer senkrecht zu dem Sägeblatt 2 festgelegten Richtung bewegbar, wozu separat ansteuerbare Achsen Y2.1 und Y2.2 dienen. Die übrigen Richtungen werden durch weitere Achsen X2, Z2 gesteuert, die beiden Schleifköpfen 3, 4 gemeinsam sind. Dadurch ist eine Anpassung an unterschiedliche Sägeblatt- und Zahngeometrien möglich. Weitere Schleifköpfe 15, 41 können vorgesehen sein.

## Patentansprüche

1. Sägeblattschärfmaschine (1), insbesondere für hartmetallbestückte Sägeblätter (2),
mit einer Aufnahme- und Positioniereinrichtung (21) für ein Sägeblatt (2), mit der das Sägeblatt (2) in Schleifposition festlegbar ist,
mit einer Schleifeinrichtung, zu der wenigstens zwei, jeweils einer Zahnflanke des Sägeblatts (2) zugeordnete Schleifköpfe (3, 4) gehören, die in wenigstens einer Richtung (Y2.1 Y2.2) quer zu dem Sägeblatt (2) unabhängig voneinander auf das Sägeblatt (2) zu und von diesem weg verstellbar sind.

2. Sägeblattschärfmaschine nach Anspruch 1, dadurch gekennzeichnet, dass das Sägeblatt (2) ein Kreissägeblatt ist und dass die Schleifköpfe (3, 4) wenigstens durch eine erste Achse (Z2) in einer ersten Richtung, die mit der Radialrichtung des Sägeblatts (2) übereinstimmt, durch eine zweite Achse (X2) in einer zweiten Richtung, die mit der Umfangsrichtung des Sägeblatts (2) übereinstimmt, und durch eine dritte Achse (Y2.1, Y2.2) in einer dritten Richtung verstellbar ist.

3. Sägeblattschärfmaschine nach Anspruch 2, dadurch gekennzeichnet, dass die Schleifköpfe (3, 4) für die dritte Richtung jeweils eine gesonderte Achse (Y2.1, Y2.2) aufweisen und dass für die anderen Richtungen für beide Schleifköpfe (3, 4) jeweils gemeinsame Achsen (X2, Z2) vorgesehen sind.

4. Sägeblattschärfmaschine nach Anspruch 2, dadurch gekennzeichnet, dass die Schleifköpfe (3, 4) in der ersten und/oder der zweiten Richtung unabhängig voneinander verstellbar sind.

5. Sägeblattschärfmaschine nach einem der Ansprüche 1 bis 4, dadurch gekennzeichnet, dass die Schleifköpfe (3, 4) zusätzlich um eine senkrecht zu der Sägeblattebene stehende Achse schwenkbar angeordnet sind.

6. Sägeblattschärfmaschine nach Anspruch 1, dadurch gekennzeichnet, dass die Schleifköpfe (3, 4) jeweils eine drehend angetriebene Schleifscheibe (9, 10) aufweisen, deren Drehachse (11, 12) jeweils in Wesentlichen parallel zu der Sägeblattebene (14) ausgerichtet ist.

7. Sägeblattschärfmaschine nach Anspruch 6, dadurch gekennzeichnet, dass die Richtung, in der die beiden Schleifköpfe (3, 4) unabhängig voneinander bewegbar sind, zu den Drehachsen (11, 12) der Schleifscheiben (9, 10) rechtwinklig ausgerichtet sind.

8. Sägeblattschärfmaschine nach Anspruch 1, dadurch gekennzeichnet, dass die Schleifköpfe (3, 4) jeweils eine drehend angetriebene Schleifscheibe (9, 10) aufweisen, deren Drehachsen (11, 12) zueinander parallel ausgerichtet sind, wobei die Schleifscheiben (9, 10) vorzugsweise in einer gemeinsamen Ebene angeordnet sind.

9. Sägeblattschärfmaschine nach Anspruch 1, dadurch gekennzeichnet, dass von den Schleifköpfen (3, 4) beabstandet wenigstens ein weiterer Schleifkopt (15), vorzugweise zwei weitere Schleifköpfe (15, 41) mit jeweils wenigstens einer Schleifscheibe (18, 42) angeordnet sind.

10. Sägeblattschärfmaschine nach Anspruch 9, dadurch gekennzeichnet, dass der weitere Schleifkopf (15) bzw. die weiteren Schleifköpfe (15, 41) unabhängig von den zum Schleifen der Zahnflanken vorgesehenen Schleifköpfen (3, 4) verstellbar angeordnet sind.

11. Sägeblattschärfmaschine nach Anspruch 10, dadurch gekennzeichnet, dass der weitere Schleifkopf (15) bzw. die weiteren Schleifköpfe (15, 41) mittels entsprechender Achsen (Z1, X1; Z3, X3) wenigstens in einer ersten Richtung und einer zu dieser rechtwinkligen zweiten Richtung verstellbar ist, wobei beide Richtungen in einer von dem Sägeblatt (2) bestimmten Ebene (14) liegen.

12. Sägeblattschärfmaschine nach Anspruch 11, dadurch gekennzeichnet, dass eine (Z1, Z3) der beiden Richtungen (Z1, X1; Z3, X3) bezüglich des bearbeiteten Zahns (2') des Sägeblatts (2) radial ausgerichtet ist.

13. Sägeblattschärfmaschine nach Anspruch 11, dadurch gekennzeichnet, dass eine (X1, X3) der beiden Richtungen (Z1, X1; Z3, X3)bezüglich des bearbeiteten Zahns (2') des Sägeblatts (2) in Umfangsrichtung ausgerichtet ist.

14. Sägeblattschärfmaschine nach Anspruch 11, dadurch gekennzeichnet, dass wenigstens einer (15) der weiteren Schleifköpfe (15, 41) mittels einer entsprechenden Achse (Y1) in einer Richtung verstellbar ist, die zu den anderen Richtungen (X1, Z1) rechtwinklig ausgerichtet ist.

15. Sägeblattscharfmaschine nach Anspruch 11, dadurch gekennzeichnet, dass wenigstens einer (41) der weiteren Schleifköpfe (15, 41) mittels einer entsprechenden Achse (B) um eine Drehachse verschwenkbar ist, die zu den anderen Richtungen rechtwinklig ausgerichtet ist und vorzugsweise rechtwinklig zu der Mittelebene (14) des Sägeblatts (2) ausgerichtet ist.

16. Sägeblattschärfmaschine nach Anspruch 11, dadurch gekennzeichnet, dass einer (15) der weiteren Schleifköpfe (15, 41) den Zahnrückenflächen und der andere (41) der Schleifköpfe (15, 41) den Zahnbrustflächen zugeordnet ist.

17. Sägeblattschärfmaschine nach einem der vorhergehenden Ansprüche, dadurch gekennzeichnet, dass die Achsen NC-Achsen sind.

18. Sägeblattschärfmaschine nach Anspruch 1, dadurch gekennzeichnet, dass die Aufnahme- und Positioniereinrichtung (21) eine Spanneinrichtung (22, 23) zur drehfesten Aufnahme des Sägeblatts (2) aufweist, die drehbar gelagert ist und mit einer Antriebseinrichtung (32) zur schrittweisen Positionierung des Sägeblatts (2) verbunden ist.

19. Sägeblattschärfmaschine nach Anspruch 18, dadurch gekennzeichnet, dass die Antriebseinrichtung (32) NC-ge steuert ist.
